# EUROPÄISCHE PATENTANMELDUNG

(11) **EP 3 165 068 A1**
(43) Veröffentlichungstag der Anmeldung: **10.05.2017**
(21) Anmeldenummer: 16401084.5
(22) Anmeldetag: 02.11.2016
(51) Int. Cl.: A01C 17/00, A01C 21/00

(54) **ZENTRIFUGALSTREUER ZUM AUSBRINGEN VON STREUGUT**

(30) Priorität: 06.11.2015 DE 102015119076
(71) Anmelder: Amazonen-Werke H. Dreyer GmbH & Co. KG, 49205 Hasbergen (DE)
(72) Erfinder: Dreyer, Justus, 49076 Osnabrück (DE); Johannaber, Stefan Jan, 49536 Lienen (DE); Kleine-Hartlage, Hubertus, 49186 Bad Iburg (DE); Rahe, Florian, 49504 Lotte (DE)

(57) **Zusammenfassung**

Die Erfindung umfasst einen Zentrifugalstreuer zum Ausbringen von Streugut, umfassend einen Vorratsbehälter (1) für das auszubringende Streugut, zwei Schleuderscheiben (5), denen je ein einstellbares Dosierorgan (4) zugeordnet ist, und eine Steuereinheit (18), wobei die Steuereinheit (18) so ausgebildet ist, dass sie eine Einstellung eines ersten Dosierorgans basierend auf einem Abgleich zwischen einem Soll-Massenstrom und einem Ist-Massenstrom regelt, während sie eine Einstellung des anderen Dosierorgans basierend auf der Einstellung des ersten Dosierorgans wählt.

## Beschreibung

Die Erfindung betrifft einen Zentrifugalstreuer zum Ausbringen von Streugut, umfassend einen Vorratsbehälter für das auszubringende Streugut, zwei Schleuderscheiben, denen je ein einstellbares Dosierorgan zugeordnet ist, und eine Steuereinheit.

Bei derartigen Zentrifugalstreuern wird das sich im Vorratsbehälter befindliche Streugut, üblicherweise Dünger, über die einstellbaren Dosierorgane den Wurfschaufeln der Schleuderscheiben in einstellbaren Mengen zugeleitet.

Um bei derartigen Zentrifugalstreuern die tatsächliche Menge Streugut, die aktuell ausgebracht wird, feststellen und regeln zu können, ist es beispielsweise durch die EP 1 008 288 B1 bekannt, den Antriebselementen eine Messeinrichtung zur Ermittlung des Antriebsdrehmomentes zuzuordnen. Basierend auf dem festgestellten Drehmoment kann ein Istwert des Massenstroms ermittelt werden. Durch Vergleich mit einem Sollwert kann eine Regelung der genannten Dosierorgane stattfinden.

Ein Nachteil der bekannten Systeme ist es, dass bei Zwei- und Mehrscheibenstreuern eine separate Regelung für jedes der Dosierorgane stattfinden muss. Diese Regelung ist rechnerisch aufwendig, so dass weniger Ressourcen der Steuereinheit für andere Aufgaben zur Verfügung stehen.

Der Erfindung liegt daher die Aufgabe zugrunde, einen Zentrifugalstreuer sowie ein Verfahren zum Betreiben eines Zentrifugalstreuers bereitzustellen, welche eine effizientere Regelung der Ausbringmenge ermöglichen. Diese Aufgabe wird durch einen Zentrifugalstreuer gemäß Patentanspruch 1 sowie durch ein Verfahren gemäß Patentanspruch 8 gelöst. Weitere vorteilhafte Ausgestaltungen der Erfindung sind in den abhängigen Ansprüchen angegeben.

Gemäß der Erfindung ist es also vorgesehen, dass die Steuereinheit so ausgebildet ist, dass sie nur eines der beiden Dosierorgane basierend auf einem Abgleich zwischen einem Soll-Massenstrom und einem Ist-Massenstrom regelt. Eine Einstellung des zweiten Dosierorgans, das der anderen der beiden Schleuderscheiben zugeordnet ist, wird dann basierend auf der Einstellung des ersten Dosierorgans gewählt. Eine separate Regelung des zweiten Dosierorgans basierend auf einem Abgleich zwischen einem Soll-Massenstrom und einem Ist-Massenstrom findet also nicht statt. Dadurch ist es möglich, Rechnerressourcen der Steuereinheit zu sparen, die somit anderen Aufgaben zur Verfügung stehen können.

Bei dem Zentrifugalstreuer kann es sich insbesondere um einen landwirtschaftlichen Düngerstreuer handeln. Bei dem Streugut handelt es sich in diesem Fall um einen, insbesondere granularen, Dünger.

Erfindungsgemäß sind wenigstens zwei Schleuderscheiben vorgesehen. Es ist jedoch auch möglich mehr als zwei Schleuderscheiben bereitzustellen. In diesem Fall wird die Einstellung wenigstens eines Dosierorgans nicht aktiv geregelt, sondern basierend auf der Einstellung eines anderen Dosierorgans gewählt.

Die Schleuderscheiben können insbesondere unterhalb des Vorratsbehälters angeordnet sein. Die Schleuderscheiben können jeweils um eine aufrechte Achse mittels einer Antriebswelle rotierend antreibbar sein.

Auf jeder der Schleuderscheiben kann wenigstens eine Wurfschaufel angeordnet sein. Es können verschieden ausgebildete Wurfschaufel- oder Schleuderscheibensätze zur Anpassung an verschiedene Arbeitsbreiten- und Streubreitenbereiche zum Einsatz kommen. Insbesondere zum Bearbeiten der äußeren Fahrgasse, also zum Grenzstreuen, können an einer oder beiden Schleuderscheiben eine oder mehrere Grenzstreuschaufeln vorgesehen sein, deren Position, insbesondere deren Winkelanstellung, einstellbar ist. Dadurch kann sichergestellt werden, dass das Streubild zur Feldgrenze hin so angepasst werden kann, dass kein oder im wesentlichen kein Streugut über die Feldgrenze gelangt.

Zur Bestimmung des Ist-Massenstroms, also des über das Dosierorgan auf die Schleuderscheibe auslaufenden Massenstroms, kann der Zentrifugalstreuer eine Sensoreinrichtung umfassen. Die Sensoreinrichtung kann als Drehmomentmesseinrichtung zur Messung des Antriebsdrehmoments der Schleuderscheiben ausgebildet sein. Das erforderliche Drehmoment zum Antrieb der Schleuderscheiben kann als Maß für die Ausbringmenge angesehen werden. Wenn das Drehmoment beispielsweise abfällt, ist dies ein Hinweis darauf, dass die eingestellte Ausbringmenge nicht ausgebracht wird. Auch andere Sensoreinrichtungen sind jedoch möglich.

Mit der Sensoreinrichtung kann das Antriebsdrehmoment jeder der Schleuderscheiben separat bestimmbar sein.

In der Steuereinheit kann ein entsprechendes Expertenprogramm hinterlegt sein, welches aus den Drehmomentwerten den entsprechenden Ist-Massenstrom ermittelt. Dafür können insbesondere eine oder mehrere Kennlinien hinterlegt sein, welche den Zusammenhang zwischen Drehmoment und Massenstrom repräsentieren.

Zur Bestimmung des Ist-Massenstroms können insbesondere auch das Leerlaufdrehmoment und/oder die Drehzahl der jeweiligen Schleuderscheibe berücksichtigt werden.

Die Steuereinheit kann so ausgebildet sein, dass sie den Soll-Massenstrom basierend auf der Fahrgeschwindigkeit des Zentrifugalstreuers bzw. des den Zentrifugalstreuer tragenden oder ziehenden Schleppers, der Sollstreumenge pro Fläche und der Arbeitsbreite errechnet. Die erforderlichen Größen können in die Steuereinheit eingebbar, über entsprechende Sensoren bestimmbar oder in einem Speicherelement hinterlegt sein. Insbesondere die Fahrgeschwindigkeit kann über einen entsprechenden Geschwindigkeitssensor bestimmbar sein. Die Steuereinheit kann so ausgebildet sein, dass sie den Soll-Massenstrom aktualisiert, wenn sich einer der Parameter, insbesondere die Fahrgeschwindigkeit, ändert.

Bei der Steuereinheit kann es sich um eine elektronische Regel- und Auswerteeinheit handeln. Diese kann insbesondere über entsprechende drahtlose oder drahtgebundene Verbindungen mit der oben genannten Sensoreinrichtung verbunden sein.

Die Steuereinheit kann in zwei oder mehr unterschiedlichen Betriebsmodi betreibbar sein, wobei sich die Betriebsmodi insbesondere in der Art der Regelung der Dosierorgane unterscheiden. Die Betriebsmodi können durch eine Bedienperson auswählbar sein. Dafür kann die Steuereinheit mit einer Eingabevorrichtung, beispielsweise in Form eines Touchscreen, verbunden sein. Alternativ oder zusätzlich können die Betriebsmodi in Abhängigkeit von einem oder mehreren Betriebsparametern des Zentrifugalstreuers auswählbar sein, beispielsweise der Position und/oder Geschwindigkeit. In diesem Fall kann die Steuereinheit so ausgebildet sein, dass sie einen Betriebsmodus in Abhängigkeit von dem einen oder mehreren Betriebsparametern automatisch wählt.

Die beschriebene Regelung, wonach nur eines der beiden Dosierorgane basierend auf einem Abgleich zwischen einem Soll-Massenstrom und einem Ist-Massenstrom geregelt wird, während eine Einstellung des zweiten Dosierorgans basierend auf der Einstellung des ersten Dosierorgans gewählt wird, kann insbesondere in einem der auswählbaren Betriebsmodi durchgeführt werden.

Die Steuereinheit kann insbesondere so ausgebildet sein, dass sie die Einstellung des ersten Dosierorgans auf das zweite Dosierorgan überträgt. Mit anderen Worten kann das zweite Dosierorgan in derselben Weise eingestellt werden, wie das erste Dosierorgan. Dieser Möglichkeit liegt die Erkenntnis zugrunde, dass für beide Schleuderscheiben üblicherweise die gleichen Durchflussbedingungen herrschen. Durch die Übertragung der Einstellung vom ersten Dosierorgan auf das zweite Dosierorgan kann eine besonders einfache und effiziente Einstellung der Dosierorgane erreicht werden.

Alternativ ist es aber auch möglich, dass die Steuereinheit so ausgebildet ist, dass sie für die Einstellung des zweiten Dosierorgans außerdem einen vorgebbaren oder vorherbestimmten Korrekturparameter berücksichtigt. Dadurch kann beispielsweise einer gewünschten Mengenreduzierung auf einer Ausbringseite Rechnung getragen werden.

Der Korrekturparameter kann einem Korrekturfaktor entsprechen, mit dem die für das erste Dosierorgan bestimmte Einstellung multipliziert wird, um die Einstellung des zweiten Dosierorgans zu erhalten. Alternativ kann der Korrekturparameter auch ein additiver oder subtraktiver Parameter sein, der von dem Wert der Einstellung des ersten Dosierorgans abgezogen oder zu diesem hinzugefügt wird, um die Einstellung des zweiten Dosierorgans zu erhalten.

Der Korrekturparameter kann insbesondere entsprechend einem ausgewählten Betriebsmodus gewählt werden. Für unterschiedliche Betriebsmodi können unterschiedliche Korrekturparameter vorgegeben oder hinterlegt sein.

Die Steuereinheit kann so ausgebildet sein, dass sie in einem auswählbaren Betriebsmodus die Einstellung des ersten Dosierorgans und des zweiten Dosierorgans jeweils basierend auf einem Abgleich zwischen einem Soll-Massenstrom und einem Ist-Massenstrom regelt. Unter gewissen Umständen kann daher die aufwändigere vollständige Regelung beider Dosierorgane basierend auf einem Abgleich zwischen einem Soll-Massenstrom und einem Ist-Massenstrom durchgeführt werden. Dieser Betriebsmodus kann alternativ zu dem oben beschriebenen Betriebsmodus auswählbar sein.

Das erste und das zweite Dosierorgan können jeweils einen Schieber umfassen, durch den jeweils eine Auslauföffnung des Vorratsbehälters in ihrer Öffnungsweite einstellbar und verschließbar ist. Die Schieber können mittels entsprechend zugeordneten motorischen Einstellmitteln betätigbar sein, wobei die Einstellmittel wiederum über die Steuereinheit betätigbar sind.

Die oben genannte Einstellung der Dosierorgane kann insbesondere der Position des jeweiligen Schiebers, insbesondere in Bezug auf die jeweilige Auslauföffnung, entsprechen. Die oben genannte Einstellung der Dosierorgane kann alternativ oder zusätzlich auch dem Aufgabepunkt des Streuguts auf der jeweiligen Schleuderscheibe entsprechen. Auch für die Einstellung des Aufgabepunktes können entsprechende Stellmittel vorgesehen sein, die über die Steuereinheit betätigbar sind.

Die Steuereinheit kann so ausgebildet sein, dass sie auf Basis von Messwerten der Sensoreinrichtung erkennen kann, ob eine oder mehrere der Auslauföffnungen ganz oder teilweise verstopft sind. Die Steuereinheit kann insbesondere so ausgebildet sein, dass sie bei Erkennen einer Verstopfung die jeweilige Auslauföffnung vollständig öffnet, den Schieber also in die vollständig geöffnete Position verfährt. Dadurch kann sich die Verstopfung lösen. Nach einer vorherbestimmten Zeitdauer kann die Steuereinheit den jeweiligen Schieber wieder in die Position bringen, die gemäß der Einstellung des jeweiligen Dosierorgans vorgesehen ist. Damit kann der erforderliche Öffnungsquerschnitt der Auslauföffnung wiederhergestellt werden und somit die gewünschte Materialmenge ausgebracht werden.

Die Verfahrensschritte des erfindungsgemäßen Verfahrens nach Anspruch 8 können insbesondere durch eine oben beschriebene Steuereinheit durchgeführt werden. Die Steuereinheit kann dabei eines oder mehrere der oben genannten Merkmale aufweisen. Der Zentrifugalstreuer und die entsprechenden Elemente des Zentrifugalstreuers können ebenso eines oder mehrere der oben genannten Merkmale aufweisen. Gemäß dem Verfahren kann die Steuereinheit einen oder mehrere der Schritte durchführen, für deren Durchführung sie zuvor als ausgebildet beschrieben wurde.

Insbesondere kann das Wählen der Einstellung des zweiten Dosierorgans ein Übertragen der Einstellung des ersten Dosierorgans auf das Dosierorgan umfassen.

Alternativ kann das Wählen der Einstellung des zweiten Dosierorgans ein Modifizieren der Einstellung des ersten Dosierorgans basierend auf einem vorgebbaren oder vorherbestimmten Korrekturparameter und ein Verwenden der modifizierten Einstellung für das zweite Dosierorgan umfassen.

Der Korrekturparameter kann wiederum eines oder mehrere der oben genannten Merkmale aufweisen.

Weitere Merkmale und Vorteile der Erfindung werden nachfolgend anhand der beispielhaften Figur erläutert. Dabei zeigt:
Die Figur einen beispielhaften Zentrifugalstreuer in einer Ansicht von hinten und in Prinzipdarstellung.

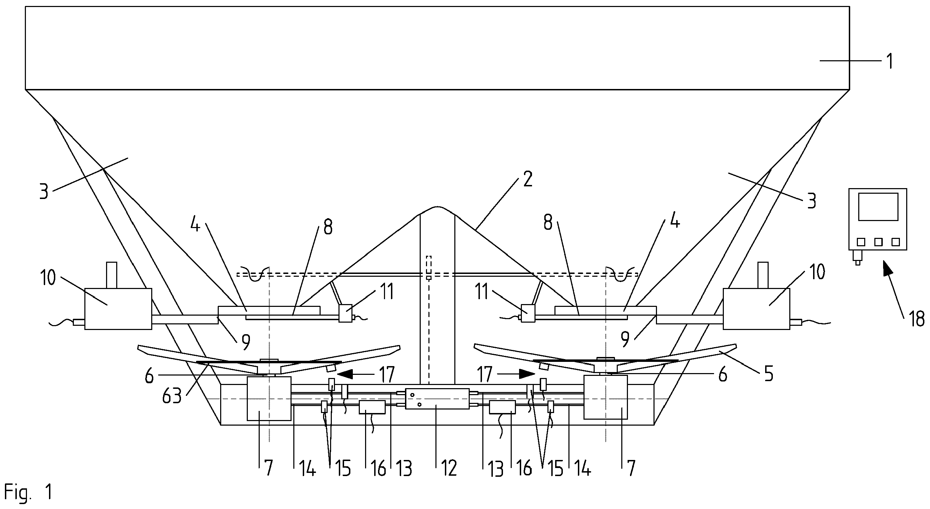

Der beispielhafte Zentrifugalstreuer gemäß Figur 1 ist ein landwirtschaftlicher Schleuderdüngerstreuer. Dieser weist einen Vorratsbehälter 1 für den auszubringenden Dünger auf. Der Vorratsbehälter 1 weist in seinem unteren Bereich zwei durch ein dachförmiges Mittelteil 2 voneinander getrennte Auslauftrichter 3 auf.

Die Auslauftrichter 3 sind jeweils durch ein Dosierorgan 4 abgeschlossen, über die der Dünger in einstellbaren Mengen den darunter angeordneten Schleuderscheiben 5 zugeführt wird. Jede Schleuderscheibe 5 wird über eine Schleuderscheibenwelle 6 und einen Hydraulikmotor 7 angetrieben. Es versteht sich, dass der Antrieb über einen Hydraulikmotor nur als Beispiel dient und andere Antriebe, beispielsweise ein mechanischer oder elektrischer Antrieb ebenfalls möglich sind.

Auf den Schleuderscheiben 5 sind Wurfschaufeln angeordnet, welche das ihnen zugeleitete Streugut in Breitenverteilung auf der Bodenoberfläche verteilen. Die Wurfschaufeln können in ihrer Position veränderbar sein. Die Wurfschaufeln können insbesondere in Scheibenebene mit unterschiedlichen Winkeln zur Radialen eingestellt werden. Durch die unterschiedliche Winkelanstellung der Wurfschaufeln kann für unterschiedliche Materialsorten und Arbeitsbreiten eine gleichmäßige Düngerverteilung erzielt werden.

Die Schleuderscheibe 5 bzw. die Dosierorgane 4 sind jeweils zueinander verstellbar, sodass die Lage des Aufgabepunktes des Düngers auf die jeweilige Schleuderscheibe 5 veränderbar ist.

Die Dosierorgane 4 weisen jeweils eine Bodenplatte 8 auf, durch welche die untere Öffnung der Auslauftrichter 3 abgeschlossen wird. In der Bodenplatte 8 sind Auslauföffnungen angeordnet, deren Öffnungsweite durch Schieber 9 einstellbar ist. Die Schieber 9 können durch motorische Einstellmittel 10 betätigt werden. Die ebenfalls in Figur 1 dargestellten motorischen Einstellmittel 11 sind zur Einstellung des Aufgabepunktes vorgesehen.

Die Hydraulikmotoren 7 werden über geeignete Einrichtungen, beispielsweise von der Hydraulikanlage des Schleppers oder einer Hydraulikpumpe, die von dem Schlepper oder mit anderen Mitteln motorisch angetrieben wird, angetrieben. Den Hydraulikmotoren 7 ist eine Regeleinrichtung 12 zugeordnet, mittels welcher die Drehzahl der Schleuderscheiben 5 gemeinsam oder unabhängig voneinander einstellbar sind.

Von der als Regelventil ausgebildeten Regeleinrichtung 12 führt jeweils eine Drucklaufleitung 13 und eine Rücklaufleitung 14 zu dem jeweiligen Hydraulikmotor 7. In der Drucklaufleitung 13 und in der Rücklaufleitung 14 sind jeweils Druckmessgeräte 15 angeordnet. Über die Werte dieser Druckmessgeräte 15 lässt sich in Verbindung mit dem Messwert eines Durchflussmessgeräts 16 das Drehmoment ermitteln. Somit bilden die Druckmessgeräte 15 in Verbindung mit dem Durchflussmessgerät 16 einen Drehmomentsensor. In dem Antrieb der Schleuderscheiben 5 ist also ein Drehmomentsensor in Form der Geräte 15 und 16 angeordnet. Außerdem ist den Schleuderscheiben 5 bzw. deren Antriebswelle 6 jeweils ein Drehzahlsensor 17 zugeordnet, mittels welchem die Drehzahl messbar ist.

Schließlich ist noch eine Steuereinheit in Form einer elektronischen Regel- und Auswerteeinheit 18 vorgesehen. Diese Steuereinheit 18 ist über Leitungen mit den einzelnen Sensoren 15, 16, 17 verbunden, sodass die von den Sensoren 15, 16, 17 ermittelten Werte in die Steuereinheit 18 übertragbar sind.

Über die Steuereinheit 18 ist auch eine Einstellung der Dosierorgane möglich, insbesondere eine Einstellung der Position des Schiebers 9 bzw. des Aufgabepunktes. Dafür ist die Steuereinheit 18 entsprechend mit den Einstellmitteln 10, 11 verbunden. Auch die Drehzahl der Schleuderscheiben 5 kann über die Steuereinheit 18 eingestellt werden.

Die Steuereinheit ist so ausgebildet, dass sie aus Werten der Sensoren 15, 16 ein Drehmoment bestimmen kann. Das erforderliche Drehmoment, um die Schleuderscheiben anzutreiben, um den Dünger in Breitenverteilung auf der Bodenoberfläche zu verteilen, ist ein Maß für die Ausbringmenge, also den Ist-Massenstrom. In der Steuereinheit 18 ist ein entsprechendes Expertenprogramm hinterlegt, welches die Zusammenhänge zwischen den Drehmomentwerten und dem Ist-Massenstrom umfasst. Dafür können insbesondere eine oder mehrere Kennlinien hinterlegt sein, welche die Zusammenhänge repräsentieren.

Die Steuereinheit 18 ist in diesem Beispiel so ausgebildet, dass mehrere Betriebsmodi ausgewählt werden können. Die Einstellung der Dosierorgane kann abhängig von dem ausgewählten Betriebsmodus stattfinden.

In einem ersten Betriebsmodus kann die Steuereinheit so ausgebildet sein, dass sie eine Einstellung eines ersten Dosierorgans der beiden Dosierorgane 4 basierend auf einem Abgleich zwischen einem Soll-Massenstrom und einem Ist-Massenstrom regelt, während sie eine Einstellung des zweiten der beiden Dosierorgane 4 basierend auf der Einstellung des ersten Dosierorgans wählt.

Dieser Betriebsmodus kann insbesondere beim Grenzstreuen eingesetzt werden. In diesem Fall wird eine äußere Fahrgasse des zu bearbeitenden Feldes bearbeitet. Das Dosierorgan 4, welches der Streuscheibe 5 zugeordnet ist, die auf der feldinneren Seite liegt, kann dem ersten Dosierorgan entsprechen, welches also basierend auf einem Abgleich zwischen einem Soll-Massenstrom und einem Ist-Massenstrom geregelt wird. Die durch die Regelung gewählte Einstellung des ersten Dosierorgans kann dann als Grundlage für die Einstellung des zweiten Dosierorgans gewählt werden, welches der Schleuderscheibe 5 zugeordnet ist, welche an der feldäußeren Seite liegt. Diesem Vorgehen liegt die Erkenntnis zugrunde, dass man zu einem hohen Prozentsatz davon ausgehen kann, dass die Durchflussbedingungen an der feldinneren Seite und der feldäußeren Seite im Wesentlichen gleich sind.

Die Einstellung der Dosierorgane kann insbesondere die Position der Schieber 9 entsprechen.

Die Einstellung des ersten Dosierorgans kann auf das zweite Dosierorgan übertragen werden. Alternativ kann auch ein vorgebbarer oder vorherbestimmter Korrekturparameter berücksichtigt werden. Beim Grenzstreuen kann der Korrekturparameter beispielsweise einer Mengenreduzierung entsprechen, die für die feldäußere Seite vorgesehen ist. Entsprechend dieser Mengenreduzierung kann die Einstellung des zweiten Dosierorgans modifiziert oder angepasst werden. Beispielsweise kann ein entsprechender Offset auf die Position des Schiebers des zweiten Dosierorgans vorgesehen werden.

Für das Ausbringen von Streugut innerhalb der landwirtschaftlichen Fläche kann auch ein zweiter Betriebsmodus ausgewählt werden, bei dem die Einstellung des ersten Dosierorgans und des zweiten Dosierorgans jeweils basierend auf einem Abgleich zwischen einem Soll-Massenstrom und einem Ist-Massenstrom geregelt wird.

Die Steuereinheit 18 kann auch so ausgebildet sein, dass sie bestimmen kann, ob eine oder mehrere der Auslauföffnungen ganz oder teilweise verstopft sind. In diesem Fall steuert die Steuereinheit 18 die Einstellmittel 10 der Schieber 9 an, sodass der Schieber in eine Stellung gebracht wird, in der die Auslauföffnung mehr oder vollständig geöffnet wird. Insbesondere kann der jeweilige Schieber 9 in seine Öffnungsendstellung gefahren werden. Dadurch kann die Ursache der Verstopfung aus der größeren Auslauföffnung herausfallen und somit beseitigt werden. Nach einer vorherbestimmten Zeitdauer wird über das Steuerelement 18 das motorisch betätigbare Einstellmittel 10 wiederum angesteuert, um den Schieber 9 in die gewünschte Stellung zu bringen, in welcher die gewünschte Öffnungsweite der Auslauföffnung und somit die gewollte Ausbringmenge eingestellt wird.

Wie bereits erwähnt, ist die Erfindung nicht auf hydraulisch angetriebene Schleuderscheiben begrenzt, sondern es sind auch andere Antriebe denkbar. Entsprechend dem gewählten Antrieb kann dann ein geeigneter Drehmomentsensor gewählt werden. Auch andere Sensoren, mit denen ein Ist-Massenstrom feststellbar ist, können alternativ oder zusätzlich zu den Drehmomentsensoren Einsatz finden.

Obwohl hier ein Zweischeibenstreuer gezeigt ist, können auch mehr als zwei Scheiben vorgesehen sein.

Der in Figur 1 gezeigte Zentrifugalstreuer ist als Anbaugerät für einen Schlepper ausgebildet. Es wäre aber auch möglich, den Zentrifugalstreuer als Nachläufer oder sogar selbstfahrend auszubilden.

Es versteht sich außerdem, dass die in dem zuvor beschriebenen Ausführungsbeispiel genannten Merkmale nicht auf diese spezielle Kombination beschränkt sind und auch in beliebigen anderen Kombinationen möglich sind.

## Patentansprüche

1. Zentrifugalstreuer zum Ausbringen von Streugut, umfassend:
einen Vorratsbehälter (1) für das auszubringende Streugut;
zwei Schleuderscheiben (5), denen je ein einstellbares Dosierorgan (4) zugeordnet ist; und
eine Steuereinheit (18);
**dadurch gekennzeichnet, dass**
die Steuereinheit (18) so ausgebildet ist, dass sie eine Einstellung eines ersten Dosierorgans basierend auf einem Abgleich zwischen einem Soll-Massenstrom und einem Ist-Massenstrom regelt, während sie eine Einstellung des zweiten Dosierorgans basierend auf der Einstellung des ersten Dosierorgans wählt.

2. Zentrifugalstreuer nach Anspruch 1, wobei die Steuereinheit (18) so ausgebildet ist, dass sie die Einstellung des ersten Dosierorgans auf das zweite Dosierorgan überträgt.

3. Zentrifugalstreuer nach Anspruch 1, wobei die Steuereinheit (18) so ausgebildet ist, dass sie für die Einstellung des zweiten Dosierorgans außerdem einen vorgebbaren oder vorherbestimmten Korrekturparameter berücksichtigt.

4. Zentrifugalstreuer nach Anspruch 3, wobei der Korrekturparameter entsprechend einem auswählbaren Betriebsmodus gewählt wird.

5. Zentrifugalstreuer nach einem der vorangegangenen Ansprüche, wobei die Steuereinheit (18) so ausgebildet ist, dass sie in einem auswählbaren Betriebsmodus die Einstellung des ersten Dosierorgans und des zweiten Dosierorgans jeweils basierend auf einem Abgleich zwischen dem Soll-Massenstrom und dem Ist-Massenstrom regelt.

6. Zentrifugalstreuer nach einem der vorangegangenen Ansprüche, wobei das erste und das zweite Dosierorgan jeweils einen Schieber (9) umfasst, durch den jeweils eine Auslauföffnung des Vorratsbehälters (1) in ihrer Öffnungsweite einstellbar und verschließbar ist.

7. Zentrifugalstreuer nach Anspruch 6, wobei die Einstellung der Dosierorgane der Position des jeweiligen Schiebers (9) entspricht.

8. Verfahren zum Betreiben eines Zentrifugalstreuers, der einen Vorratsbehälter (1) für das auszubringende Streugut, zwei Schleuderscheiben (5), denen je ein einstellbares Dosierorgan (4) zugeordnet ist, und eine Steuereinheit (18) umfasst, das Verfahren umfassend die Schritte:
Bestimmen eines Soll-Massenstroms und eines Ist-Massenstroms;
Regeln einer Einstellung eines ersten Dosierorgans basierend auf einem Abgleich zwischen dem Soll-Massenstrom und dem Ist-Massenstrom; und
Wählen einer Einstellung des zweiten Dosierorgans basierend auf der Einstellung des ersten Dosierorgans.

9. Verfahren nach Anspruch 8, wobei das Wählen der Einstellung des zweiten Dosierorgans ein Übertragen der Einstellung des ersten Dosierorgans auf das zweite Dosierorgan umfasst.

10. Verfahren nach Anspruch 8, wobei das Wählen der Einstellung des zweiten Dosierorgans umfasst:
Modifizieren der Einstellung des ersten Dosierorgans basierend auf einem vorgebbaren oder vorherbestimmten Korrekturparameter, und
Verwenden der modifizierten Einstellung für das zweite Dosierorgan.
